# FASCICULE DE BREVET EUROPEEN

(11) **EP 4 145 794 B1**
(45) Date de publication et mention de la délivrance du brevet: **20.11.2024**
(21) Numéro de dépôt: 22193706.3
(22) Date de dépôt: 02.09.2022
(51) Int. Cl.: H04L 41/0896, H04L 43/0805, H04L 41/044

(54) **PROCÉDÉ D'INTÉGRATION DYNAMIQUE MIS EN OEUVRE AU COURS DE LA FÉDÉRATION DE RÉSEAUX DE RADIOCOMMUNICATION ET PRODUIT PROGRAMME D'ORDINATEUR**
VERFAHREN ZUR DYNAMISCHEN INTEGRATION WÄHREND DER BILDUNG EINES VERBUNDS VON FUNKKOMMUNIKATIONSNETZEN UND COMPUTERPROGRAMMPRODUKT
METHOD FOR DYNAMIC INTEGRATION IMPLEMENTED DURING THE FEDERATION OF RADIO COMMUNICATION NETWORKS AND COMPUTER PROGRAM PRODUCT

(30) Priorité: 03.09.2021 FR 2109229
(43) Date de publication de la demande: 08.03.2023
(73) Titulaire: THALES, 92400 Courbevoie (FR); Thales DIS France SA, 92190 Meudon (FR)
(72) Inventeur: SCHOLLER, Franck, 92622 Gennevilliers Cedex (FR); REBECCHI, Filippo, 92622 Gennevilliers Cedex (FR); BOUET, Mathieu, 92622 Gennevilliers Cedex (FR); CONAN, Vania, 92622 Gennevilliers Cedex (FR); SALIBA, Eric, 92622 Gennevilliers Cedex (FR); ANSLOT, Michel, 13881 Gémenos Cedex (FR)
(74) Mandataire: Lavoix

(56) Documents cités:
- US-A1- 2021 014 113
- SAMI HANI ET AL: "Dynamic On-Demand Fog Formation Offering On-the-Fly IoT Service Deployment", IEEE TRANSACTIONS ON NETWORK AND SERVICE MANAGEMENT, IEEE, USA, vol. 17, no. 2, 1 January 2020 (2020-01-01), pages 1026 - 1039, XP011792062, DOI: 10.1109/TNSM.2019.2963643

## Description

La présente invention concerne la fédération d'une pluralité de réseaux de radiocommunication et, plus particulièrement, la définition de la fonction d'orchestration de services au sein du réseau fédéré.

La fédération de réseaux permet de connecter deux réseaux distincts (éventuellement à travers un autre réseau sous-jacent) et de configurer ces deux réseaux de manière à ce qu'ils apparaissent comme un seul réseau étendu pour leurs utilisateurs.

Un réseau de radiocommunication est un réseau du type « private mobile radiocommunications » - PMR ( « réseau mobile privé de radiocommunication ») ou un réseau du type respectant la norme 3G, 4G, 5G, ou plus, telles que définies par le 3GPP (« 3rd Génération Partnership Project »). Dans ce qui suit, sera plus particulièrement pris pour exemple le cas d'un réseau 4G, mais l'homme du métier sait comment appliquer l'enseignement de la présente description au cas d'une autre norme, notamment la norme 5G.

De manière générale, un réseau de radiocommunication comporte un réseau radio d'accueil (« Radio Access Network - RAN »), un réseau d'infrastructure (« Core Network - CN ») et avantageusement un centre de données, de préférence virtuel (« Software-defined data center - SDDC »).

Les réseaux de radiocommunication peuvent être de différents types, en fonction notamment de leur capacité maximale. Ainsi par exemple, dans un cadre militaire, un réseau de radiocommunication peut relever par exemple d'un premier type, tel qu'un réseau tactique avec une capacité maximum d'une dizaine d'utilisateurs, d'un second type, tel qu'un réseau de données de théâtre avec une capacité maximum de quelques centaines d'utilisateurs, ou d'un troisième type, tel qu'un réseau de commandement avec une capacité maximum de quelques milliers d'utilisateurs.

De plus, les réseaux de radiocommunication peuvent être déployables et/ou mobile. On parle de réseaux de terrain. Par exemple, les réseaux tactiques sont essentiellement des réseaux de terrain.

Dans un réseau radiocommunication, l'actualisation des services est réalisée par un dispositif d'orchestration de services.

De manière générale, l'orchestration correspond à la configuration, la gestion et la coordination automatisées des systèmes informatiques, applications et services du réseau de radiocommunication. L'orchestration facilite la gestion des tâches au sein du réseau de radiocommunication en mettant en oeuvre une pluralité de règles. Une règle a exécutée à l'instant courant est choisie en fonction des requêtes que reçoit l'orchestrateur et de l'état courant du réseau que l'orchestrateur maintient. Le résultat de l'application d'une règle est une ou plusieurs commandes adressées à des contrôleurs.

L'architecture d'un tel dispositif peut varier d'une réalisation à l'autre. Dans le présent document, sans perdre de généralité, le dispositif d'orchestration de services comporte un orchestrateur de services supervisant divers contrôleurs, en particulier un contrôleur de réseau et, avantageusement, un contrôleur de sécurité et un contrôleur de centre de données, ou contrôleur IT (« Information Technology ») dans ce qui suit.

Un orchestrateur ou un contrôleur peut être constitué d'une pluralité de machines. Cependant, pour simplifier la présente description, il sera considéré qu'un orchestrateur ou un contrôleur est constitué d'un unique ordinateur.

Les réseaux de radiocommunication (en particulier les réseaux de terrain lorsque leurs zones géographiques de couverture radio viennent à se recouvrir mutuellement) doivent pouvoir être fédérés automatiquement pour offrir par exemple une flexibilité d'usage (pour s'adapter aux déplacements des réseaux de terrain), une simplicité de mise en oeuvre (pour construire un réseau étendu présentant des fonctions avancées comme par exemple le découpage (« slicing ») ou le partage de ressources applicatives des centres de données), une sécurité accrue (pour permettre une interconnexion en sécurité), ou encore une optimisation des usages (pour permettre une répartition de la charge et des ressources applicatives entre réseaux une fois interconnectés).

Le document S. HANI et al. "Dynamic On-Demand Fog Formation Offering On-the-Fly loT Service Deployment", IEEE TRANSACTIONS ON NETWORK AND SERVICE MANAGEMENT, IEEE, USA, vol. 17, no. 2, 1 janvier 2020 (2020-01-01), pages 1026-1039, divulgue une architecture composée de quatre couches, respectivement « cloud », « orchestration », « fog », et « loT ». Ce document est centré sur le déploiement par la couche « cloud », des couches « orchestration » et « fog » pour répondre aux besoins des dispositifs « loT ». Selon ce document, qui ne relève pas de la problématique de la fédération de réseaux, le cloud sélectionne un noeud parmi une pluralité de noeuds dits « volontaires » du réseau en tant qu'orchestrateur. A son tour, l'orchestrateur sélectionne un ou plusieurs noeud(s) parmi une pluralité de noeuds volontaires du réseau en tant que noeud « fog ». Enfin, des services sont déployés sur chaque noeud « fog » sélectionné sous forme de conteneurs. La sélection d'un noeud volontaire en tant qu'orchestrateur est fondée sur le calcul d'une fonction de coût sur l'ensemble des ressources du réseau.

Le document US 2021/014113 A1 divulgue l'orchestration d'un environnement « EDGE ».

Le document US 2021/055974 A1 divulgue une architecture comportant un essaim d'orchestrateurs, qui communiquent entre eux selon un protocole de consensus permettant de mettre en commun les ressources qu'ils gèrent.

A l'heure actuelle, il n'existe aucune spécification concernant la fédération de réseaux autre que le standard « Federated Mission Networking » - FMN (ou « réalisation de réseaux de conduite des opérations en coalition»). Or, ce standard ne prend aucunement en compte les aspects d'intégration permettant une prise en compte des contraintes techniques liées à une interconnectivité entre deux réseaux, en particulier en ce qui concerne la fonction d'orchestration de services du réseau étendu obtenu en fédérant deux réseaux.

Le but de cette invention est de résoudre ce problème.

Pour cela l'invention a pour objet un procédé d'intégration dynamique et un produit programme selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- [Fig. 1] La figure 1 est une représentation schématique d'une infrastructure comportant deux réseaux de terrains fédérés ; et,
- [Fig. 2] La figure 2 est une représentation sous forme de blocs d'un mode de réalisation du procédé selon l'invention.

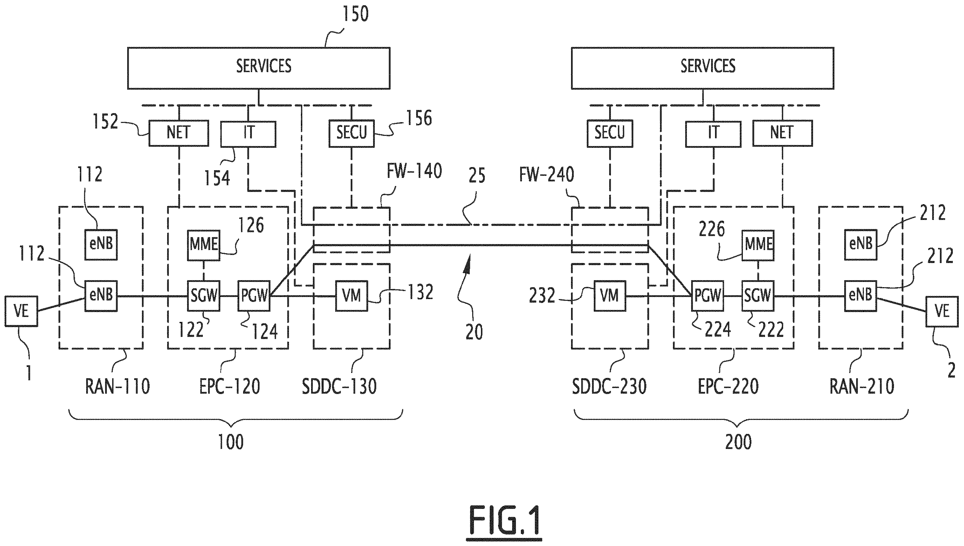

En se référant à la figure 1, l'infrastructure comporte un premier réseau 100 et un second réseau 200, destinés à être fédéré suite à l'établissement d'une liaison 20.

Le premier réseau 100 comporte :
- un réseau d'accès radio ou RAN (« Radio Access Network ») 110, intégrant une pluralité de points d'accès ou eNB (« e-Node B » en 4G) 112. Un eNB permet à un équipement utilisateur ou UE 1 de se connecter, au moyen d'une liaison radio, au premier réseau 100.
- un réseau coeur ou EPC (« Evolved Packet Core » en 4G) 120. De manière schématique, l'EPC 120 comporte une passerelle SGW 122 avec le RAN 110, une passerelle PGW 124 avec le monde IP et un MME 126.
- un réseau privé ou SDDC (« Software-defined data center ») 130 qui est un réseau sécurisé comportant plusieurs services virtualisés VM 132.
- un pare-feu FW (« Firewall ») 140 pour la communication vers l'extérieur, par exemple selon le protocole IP.

Le premier réseau 100 comporte en outre un d'orchestrateur de services 150 supervisant un contrôleur de réseau 152, un contrôleur de sécurité 156 et un contrôleur IT 154.

Le contrôleur de réseau 152 contrôle les machines de l'EPC 120 pour les configurer selon les commandes reçues de l'orchestrateur de services. Il s'agit par exemple de paramétrer le routage d'un certain type de flux de données d'un utilisateur identifié pour assurer une bande passante.

Le contrôleur IT 154 contrôle les machines du SDDC 130 pour les configurer selon les commandes reçues de l'orchestrateur de services. Il s'agit par exemple d'instancier une application virtuelle particulière en fonction d'un besoin identifié, lui réserver une certaine ressource mémoire et de calcul, éventuellement la décommissionner lorsqu'elle n'est plus utilisée.

Le contrôleur de sécurité 156 contrôle les machines du premier réseau 100, notamment le pare-feu 140, pour les configurer selon les commandes reçues de l'orchestrateur de services. Il s'agit pare exemple de filtrer la circulation des données d'un utilisateur authentifié en fonction de ses privilèges associés à son profil.

L'orchestrateur de services 150 permet donc, à travers les contrôleurs, l'affectation de ressources physiques et/ou virtuelles disponibles en fonction des besoins des utilisateurs (en conformité avec leurs profils respectifs).

Les ressources physiques comprennent par exemple des capacités de calcul du SDDC, des capacités mémoire de travail du SDDC, des capacités de bande passante sur le réseau, des capacités de translation d'adresse réseau (« Network Address Translation - NAT) par le pare-feu, etc.

Les ressources virtuelles comprennent par exemple des briques virtualisées correspondant chacune à une application permettant d'effectuer un traitement particulier sur des données spécifiques, tel que par exemple une application d'inspections en profondeur de paquets (« Deep Packet Inspection - DPI ») par le pare-feu, une application de traitement d'images par le SDDC, ou encore une application de compression d'un flux de données par le réseau.

Dans l'architecture 4G, l'orchestrateur de services est dénommé système de support aux opérations - OSS (« Operations Support System »).

Le second réseau 200 est similaire au premier réseau 100. Un composant du second réseau similaire à un composant du premier réseau est identifié par un chiffre de référence qui correspond au chiffre de référence utilisé pour identifier ce composant similaire du premier réseau, augmenté d'une centaine.

L'adjectif de premier sera réservé à un composant du premier réseau et celui de second sera réservé au composant similaire du second réseau.

La problématique consiste par conséquent à déterminer comment munir d'une fonction d'orchestration de services, le réseau fédéré (réseau étendu - « Wide Area Network » - WAN) résultant de la fédération des premier et second réseaux 100 et 200 lors de la mise en place de la liaison 20.

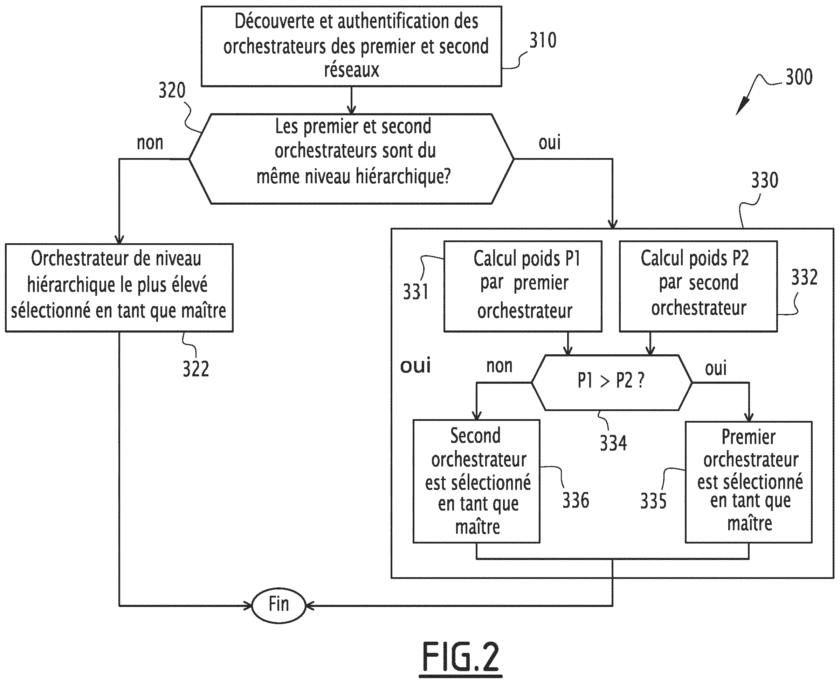

En se référant à la figure 2, un procédé d'intégration dynamique 300 est présenté, dont la mise en oeuvre permet de sélectionner l'un des orchestrateurs de services parmi les premier et second orchestrateurs de services 150 et 250 en tant qu'orchestrateur de services maître du réseau fédéré, l'autre orchestrateur devenant un orchestrateur de services esclave.

L'orchestrateur de services maître (par exemple le premier orchestrateur) a une vision globale du réseau fédéré. Il est donc capable de gérer des services de télécommunication qui s'étendent entre les deux réseaux 100 et 200. Il maintient par conséquent un état global du réseau fédéré. Il reçoit des requêtes, applique des règles et génère des commandes dont le périmètre concerne le réseau fédéré dans son ensemble. Si des commandes portent sur des services associés au réseau que cet orchestrateur maître gérait avant la fédération (le premier réseau 100 dans notre exemple), ces commandes sont transmises aux contrôleurs locaux pour exécution. Si ces commandes portent sur des services associés à l'autre réseau que cet orchestrateur maître ne gérait pas avant la fédération (le second réseau 200 dans notre exemple), ces commandes sont transmises à l'orchestrateur esclave.

L'orchestrateur de services qui devient l'orchestrateur esclave du réseau fédéré se place dans un mode d'écoute des commandes de l'orchestrateur maître. Lorsqu'il reçoit une commande de l'orchestrateur maître, il la relaie vers l'un ou l'autre des contrôleurs locaux (ceux du second réseau dans notre exemple). L'orchestrateur de services fonctionne ainsi sous la supervision de l'orchestrateur maître.

Par ailleurs, l'orchestrateur esclave remonte vers l'orchestrateur maître des informations locales permettant à l'orchestrateur maître de maintenir la partie de l'état du réseau fédérée relatif à cet autre réseau.

En variante, l'orchestrateur maitre communique directement avec les contrôleurs locaux de l'autre réseau qu'il ne gérait pas avant la fédération, l'orchestrateur esclave étant alors placé dans un mode de veille.

Dans le mode de réalisation particulier de la figure 2, le procédé 300 débute, suite à l'établissement de la liaison physique 20 en une étape de découverte 310 entre les premier et second orchestrateurs de services 150 et 250. Cette étape consiste en l'échange d'un message de présence entre les premier et second orchestrateurs de services 150 et 250, à travers la liaison 20, suivi d'une procédure d'authentification mutuelle des deux orchestrateurs. En cas d'authentification réussie, un plan d'orchestration 25 est établi entre les premier et second orchestrateurs de services 150 et 250 pour l'échange de messages d'orchestration au format prédéfini.

Est par exemple mis en oeuvre le protocole de découverte SEND (« Secure Neighbor Discovery » pour « découverte sécurisée d'hôtes voisins»). Chaque orchestrateur diffuse (« broadcast ») un message incluant une clé publique. Ces clés permettent ensuite la mise en place du plan de communication entre les deux orchestrateurs de services. L'ensemble des clefs cryptographiques est de préférence chargé dans la mémoire d'un orchestrateur lors de la préparation de sa mission
De manière avantageuse, dans une étape 320, un premier niveau hiérarchique du premier orchestrateur de services et transmis au second orchestrateur de services. Ce dernier compare son propre niveau hiérarchique (second niveau hiérarchique) avec le premier niveau hiérarchique reçue.

Le niveau hiérarchique est une quantité attribuée à un réseau/orchestrateur et permettant de classer les réseaux/orchestrateurs les uns par rapport aux autres, par exemple selon une organisation hiérarchique entre un niveau hiérarchique le plus haut et un niveau hiérarchique le plus bas, avec éventuellement un ou plusieurs niveau(x) hiérarchique(s) intermédiaire(s).

Si ces deux niveaux sont différents, l'orchestrateur de services ayant le niveau hiérarchique le plus élevé est immédiatement choisi comme orchestrateur maître, l'autre orchestrateur étant choisi comme orchestrateur esclave (étape 322).

Par exemple, si parmi les utilisateurs courants du premier réseau se trouve le commandant de la manoeuvre en cours, est attribué au premier orchestrateur de services un niveau hiérarchique élevé. Ainsi, si le premier réseau doit être fédéré avec un second réseau, le premier orchestrateur sera systématiquement choisi comme maître du réseau fédéré, et contrôlera le second orchestrateur de services. Ceci permet de garantir la qualité des services mis à disposition de cet utilisateur privilégié.

En revanche, si les deux réseaux à fédérer relèvent d'un même niveau hiérarchique, le procédé passe à l'étape 330 correspondant à une négociation entre les premier et second orchestrateurs de services dans le but de décider de l'orchestrateur allant prendre la main pour l'orchestration globale du réseau fédéré.

Une fonction de poids commune à tout réseau de radiocommunication est prédéfinie conventionnellement. La fonction de poids est une métrique permettant d'agréger, dans un unique indicateur quantitatif, différentes informations relatives aux ressources mises à disposition par un réseau de radiocommunication à un instant courant, ainsi qu'à leur niveau de disponibilité (ou d'utilisation) audit instant courant.

La fonction de poids est par exemple calculée à partir :
- du nombre courant d'utilisateurs du réseau à l'instant courant, en tant que mesure de la charge du réseau ;
- une mesure de la capacité CPU totale et/ou disponible à l'instant courant dans le SDDC du réseau ;
- une mesure de la capacité mémoire totale et/ou disponible à l'instant courant dans le SDDC du réseau ; et,
- du type de chacune des applications instanciées à l'instant courant sur le réseau, chaque type étant associé à un mesure d'importance. La mesure de chaque type de ressource (par exemple CPU, mémoire, disque, ...) peut être modifié via une mesure de pertinence : par exemple, en prenant en compte le nombre de requêtes d'utilisation de la même ressource avec, sa disponibilité actuelle et attendue dans le futur, son poids relatif et importance. A chaque requête est associée une mesure d'efficacité qui tient en compte des demandes en ressources de la requête elle-même et des mesures de pertinence pour chaque ressource calculée itérativement.

Avantageusement, une ressource contribue à la fonction de poids sur la base d'un niveau de priorité qui leur est attribuée. Les niveaux de priorité des ressources peuvent être statiques ou redéfinis lors d'une actualisation à tout moment de l'utilisation du réseau. Par exemple, pour chaque utilisateur, un niveau de priorité est défini à partir d'un profil de l'utilisateur (un utilisateur ayant une importance haute devant contribuer d'avantage au poids total). Par exemple encore, un niveau de priorité est associé à chaque noeud du réseau (un noeud offrant une connectivité vers un réseau étendu - WAN devant contribuer d'avantage au poids total).

Le premier orchestrateur calcule à intervalle régulier une première valeur courante de la fonction de poids (étape 331).

De même, le second orchestrateur calcule à intervalle régulier une seconde valeur courante de la fonction de poids (étape 332).

A l'instant de la fédération des deux réseaux, à l'étape 330, c'est-à-dire au moment de l'établissement de la liaison 20, les première et seconde valeurs courantes de la fonction de poids sont échangées entre les premier et second orchestrateurs de services et chaque orchestrateur compare les première et seconde valeurs entre elles (étape 334).

L'orchestrateur de services ayant la valeur la plus importante prend le rôle de maitre, tandis que l'orchestrateur de services ayant la valeur la plus faible prend le rôle d'esclave (étapes 335 et 336).

Ainsi, la présente invention propose un procédé d'intégration dynamique permettant de définir automatiquement le dispositif orchestrateur maître lors de la fédération d'une pluralité de réseaux de terrain. Lorsque deux réseaux sont fédérés, s'ils relèvent de types différents, c'est le dispositif d'orchestration de services du réseau hiérarchiquement le plus élevé qui prend la main sur l'orchestration des services du réseau fédéré.

Le présent procédé peut être mis en oeuvre pour fédérer plus de deux réseaux entre eux. Il est par exemple d'abord mis en oeuvre entre un premier orchestrateur d'un premier réseau et un second orchestrateur d'un second réseau pour déterminer un orchestrateur maitre intermédiaire. Il est ensuite mis en oeuvre entre cet orchestrateur maitre intermédiaire et un troisième orchestrateur d'un troisième réseau. De proche en proche est déterminé l'orchestrateur maitre pour la pluralité de réseaux.

En revanche, si les deux réseaux sont du même niveau hiérarchique, une métrique est définie qui permet de les comparer au moment de la fédération pour donner la prévalence à l'un plutôt qu'à l'autre orchestrateur de services.

Pour mettre en oeuvre la présente invention, un orchestrateur de services est adapté pour de préférence mémoriser un attribut de niveau hiérarchique.

Il est adapté pour mémoriser un attribut maître/esclave qui prend la valeur « maître » ou « esclave » lorsque le réseau de radiocommunication géré par l'orchestrateur de services considéré fait partie d'un réseau fédéré, ou « non défini » lorsque ledit réseau de radiocommunication ne fait pas partie d'un réseau fédéré.

Il est également adapté pour mémoriser les identifiants du ou de chaque esclave si l'orchestrateur est choisi comme orchestrateur de services maître du réseau fédéré, et les identifiants du ou de chaque maitre si l'orchestrateur est choisi comme orchestrateur de services esclave.

Chaque orchestrateur de services est également adapté pour calculer périodiquement la valeur de la fonction de poids prédéfinie, ce calcul s'effectuant à partir des informations que l'orchestrateur a de l'état courant du réseau qu'il gère.

L'homme du métier comprend que la « fonction de poids » est définie en tant que métrique permettant d'agréger, à l'instant courant, des informations différentes relatives aux ressources d'un réseau, ainsi qu'au niveau de disponibilité de chacune de ces ressources.

C'est bien le premier (respectivement second) calculateur du premier (respectivement du second réseau) qui effectue l'étape consistant à calculer une première (respectivement une seconde) valeur de la fonction de poids.

L'homme du métier connaît les architectures du type maître/esclave et par conséquent les expressions mutuellement relatives de « calculateur maître » et de « calculateur esclave ». Notamment, l'orchestrateur maître s'il décide d'un déploiement spécifique sur le réseau contrôlé par l'orchestrateur esclave transmet à ce dernier des commandes, que l'orchestrateur esclave interprète pour effectivement réaliser le déploiement requis. L'orchestrateur esclave transmet à l'orchestrateur maître les informations nécessaires pour que l'orchestrateur maître puisse déterminer l'état courant du réseau contrôlé par l'orchestrateur esclave.

## Revendications

1. Procédé (300) mis en oeuvre au cours d'une procédure de fédération d'un premier réseau de radiocommunication (100) avec un second réseau de radiocommunication (200), le premier réseau de radiocommunication (100) comportant un premier orchestrateur de services (150) et le second réseau de radiocommunication (200) comportant un second orchestrateur de services (250), le procédé comportant les étapes consistant à :
- agréger, au moyen d'une fonction de poids, différentes informations relatives aux ressources mises à disposition par le premier réseau de radiocommunication, respectivement par le second réseau de radiocommunication, à un instant courant, ainsi qu'à leur niveau de disponibilité audit instant courant ;
- calculer (331) périodiquement une première valeur de la fonction de poids pour le premier réseau de radiocommunication par le premier orchestrateur de services ;
- calculer (332) périodiquement une seconde valeur de la fonction de poids pour le second réseau de radiocommunication par le second orchestrateur de services ; et, lors de l'établissement d'une liaison de communication (20) entre les premier et second réseaux de communication ;
- comparer (334) entre elles les première et seconde valeurs de la fonction de poids ; et,
- si la première valeur est supérieure à la seconde valeur, choisir le premier orchestrateur de services en tant qu'orchestrateur de services maître d'un réseau fédéré résultant de la fédération des premier et second réseaux de radiocommunication (100, 200), le second orchestrateur de services étant placé sous une supervision du premier orchestrateur de services en tant qu'orchestrateur de services esclave, et, si la seconde valeur est supérieure à la première valeur, choisir le second orchestrateur de services en tant qu'orchestrateur de services maître du réseau fédéré, le premier orchestrateur de services étant placé sous une supervision du second orchestrateur de services en tant qu'orchestrateur de services esclave,
le procédé étant **caractérisé en ce que** le premier orchestrateur de services, respectivement le second orchestrateur de services, mémorise un premier niveau hiérarchique, respectivement un second niveau hiérarchique, associé au premier réseau de radiocommunication, respectivement au second réseau de radiocommunication, et **en ce que** le procédé comporte, en outre, une étape (320) consistant à comparer les premier et second niveau hiérarchiques entre eux,
s'ils sont identiques passer aux étapes consistant à comparer les valeurs de la fonction de poids, et s'ils sont différents, choisir l'orchestrateur de services ayant le niveau hiérarchique le plus élevé en tant qu'orchestrateur de services maître, et l'autre orchestrateur de services en tant qu'orchestrateur de services esclave.

2. Procédé selon la revendication 1, dans lequel chaque orchestrateur de services (150, 250) mémorise un attribut prenant la valeur « non défini » avant la procédure de fédération des premier et second réseaux de radiocommunication et la valeur « maître » ou « esclave » après la procédure de fédération des premier et second réseaux de radiocommunication.

3. Procédé selon la revendication 1, dans lequel l'orchestrateur de services maître mémorise un identifiant du ou de chaque orchestrateur de services esclave.

4. Procédé selon l'une quelconque des revendications 1 à 3, dans lequel l'orchestrateur de services d'un réseau de radiocommunication pilote un contrôleur de réseau, un contrôleur de sécurité et un contrôleur de centre de données.

5. Procédé selon l'une quelconque des revendications 1 à 4, comportant une première étape de découverte (310) consistant en l'échange de messages entre les premier et second orchestrateurs de services (150, 250) pour établir un plan d'orchestration (25) à travers la liaison (20) entre les premier et second orchestrateurs de services.

6. Procédé selon la revendication 5, dans lequel l'étape de découverte comporte la mise en oeuvre d'une procédure d'authentification mutuelle entre les premier et second orchestrateurs de services.

7. Produit programme d'ordinateur comportant des instructions logicielles qui, lorsqu'elles sont exécutées par un ordinateur, permettent une mise en oeuvre d'un procédé selon l'une quelconque des revendications précédentes.

## Patentansprüche

1. Verfahren (300), das im Verlauf einer Prozedur zum Zusammenführen eines ersten Funkkommunikationsnetzes (100) mit einem zweiten Funkkommunikationsnetz (200) implementiert wird, das erste Funkkommunikationsnetz (100) umfassend einen ersten Dienstorchestrator (150) und das zweite Funkkommunikationsnetz (200) umfassend einen zweiten Dienstorchestrator (250), das Verfahren umfassend die folgenden Schritte:
- Aggregieren, mittels einer Gewichtungsfunktion, verschiedener Informationen in Bezug auf Ressourcen, die von dem ersten Funkkommunikationsnetz bzw. von dem zweiten Funkkommunikationsnetz zu einem aktuellen Zeitpunkt bereitgestellt werden, sowie in Bezug auf ihren Verfügbarkeitsgrad zu dem aktuellen Zeitpunkt;
- periodisches Berechnen (331) eines ersten Werts der Gewichtungsfunktion für das erste Funkkommunikationsnetz durch den ersten Dienstorchestrator;
- periodisches Berechnen (332) eines zweiten Werts der Gewichtungsfunktion für das zweite Funkkommunikationsnetz durch den zweiten Dienstorchestrator; und beim Aufbauen einer Kommunikationsverbindung (20) zwischen dem ersten und dem zweiten Kommunikationsnetz;
- Vergleichen (334) des ersten und des zweiten Werts der Gewichtsfunktion miteinander; und,
- wenn der erste Wert größer ist als der zweite Wert, Auswählen des ersten Dienstorchestrators als Master-Dienstorchestrator eines zusammengeführten Netzes, das aus dem Zusammenführen des ersten und des zweiten Funkkommunikationsnetzes (100, 200) resultiert, wobei der zweite Dienstorchestrator unter Aufsicht des ersten Dienstorchestrators als Slave-Dienstorchestrator platziert wird, und, wenn der zweite Wert größer ist als der erste Wert, Auswählen des zweiten Dienstorchestrators als Master-Dienstorchestrator des zusammengeführten Netzes, wobei der erste Dienstorchestrator unter einr Aufsicht des zweiten Dienstorchestrators als Slave-Dienstorchestrator platziert wird,
wobei das Verfahren **dadurch gekennzeichnet ist, dass** der erste Dienstorchestrator bzw. der zweite Dienstorchestrator eine erste hierarchische Ebene bzw. eine zweite hierarchische Ebene speichert, die mit dem ersten Funkkommunikationsnetz bzw. dem zweiten Funkkommunikationsnetz assoziiert ist, und dass das Verfahren ferner einen Schritt (320) umfasst, der darin besteht, die erste und die zweite hierarchische Ebene miteinander zu vergleichen,
wenn sie identisch sind, weiter mit den Schritten, die darin bestehen, die Werte der Gewichtungsfunktion zu vergleichen, und wenn sie verschieden sind, Auswählen des Dienstorchestrators mit der höchsten Hierarchieebene als Master-Dienstorchestrator und den anderen Dienstorchestrator als Slave-Dienstorchestrator.

2. Verfahren nach Anspruch 1, wobei jeder Dienstorchestrator (150, 250) ein Attribut speichert, das vor dem Zusammenführungsverfahren des ersten und des zweiten Funkkommunikationsnetzes den Wert "nicht definiert", und nach dem Zusammenführungsverfahren des ersten und des zweiten Funkkommunikationsnetzes den Wert "Master" oder "Slave" annimmt.

3. Verfahren nach Anspruch 1, wobei der Master-Dienstorchestrator eine Kennung des oder jedes Slave-Dienstorchestrators speichert.

4. Verfahren nach einem der Ansprüche 1 bis 3, wobei der Dienstorchestrator eines Funkkommunikationsnetzes eine Netzsteuerung, eine Sicherheitssteuerung und eine Rechenzentrumssteuerung steuert.

5. Verfahren nach einem der Ansprüche 1 bis 4, umfassend einen ersten Entdeckungsschritt (310), der aus dem Austausch von Nachrichten zwischen dem ersten und dem zweiten Dienstorchestrator (150, 250) besteht, um einen Orchestrierungsplan (25) über die Verbindung (20) zwischen dem ersten und dem zweiten Dienstorchestrator zu erstellen.

6. Verfahren nach Anspruch 5, wobei der Entdeckungsschritt die Implementierung eines Verfahrens zur gegenseitigen Authentifizierung zwischen dem ersten und dem zweiten Dienstorchestrator umfasst.

7. Computerprogrammprodukt, umfassend Softwareanweisungen, die, wenn sie von einem Computer ausgeführt werden, eine Implementierung eines Verfahrens nach einem der vorherigen Ansprüche ermöglichen.

## Claims

1. A method (300) implemented during a procedure for federating a first radio communication network (100) with a second radio communication network (200), the first radio communication network (100) comprising a first service orchestrator (150) and the second radio communication network (200) comprising a second service orchestrator (250), the method comprising the steps of:
- aggregating, by means of a weight function, various items of information relating to the resources made available by the first radio communication network, respectively by the second radio communication network, at a current time, as well as their level of availability at said current time;
- periodically calculating (331) a first value of the weight function for the first radio communication network by the first service orchestrator;
- periodically calculating (332) a second value of the weight function for the second radio communication network by the second service orchestrator; and, when establishing a communication link (20) between the first and second communication networks;
- comparing (334) the first and second values of the weight function with each other; and,
- if the first value is greater than the second value, selecting the first service orchestrator as master service orchestrator of a federated network resulting from the federation of the first and second radio communication networks (100, 200), the second service orchestrator being placed under a supervision of the first service orchestrator as slave service orchestrator, and, if the second value is greater than the first value, selecting the second service orchestrator as the master service orchestrator of the federated network, the first service orchestrator being placed under supervision of the second service orchestrator as the slave service orchestrator,
the method being **characterised in that** the first service orchestrator, respectively the second service orchestrator, stores a first hierarchical level, respectively a second hierarchical level, associated with to the first radio communication network, respectively to the second radio communication network, and **in that** the method furthermore comprises a step (320) consisting in comparing the first and second hierarchical levels with one another,
if they are identical, proceed to the steps consisting of comparing the values of the weight function, and if they are different, choose the service orchestrator with the highest hierarchical level as the master service orchestrator, and the other service orchestrator as the slave service orchestrator.

2. Method according to claim 1, in which each service orchestrator (150, 250) stores an attribute taking the value "undefined" before the procedure for federating the first and second radio communication networks and the value "master" or "slave" after the procedure for federating the first and second radio communication networks.

3. A method according to claim 1, wherein the master service orchestrator stores an identifier of the or each slave service orchestrator.

4. A method of any one of claims 1 to 3, wherein the service orchestrator of a radio network drives a network controller, a security controller and a data centre controller.

5. A method according to any one of claims 1 to 4, comprising a first discovery step (310) consisting of exchanging messages between the first and second service orchestrators (150, 250) to establish an orchestration plan (25) across the link (20) between the first and second service orchestrators.

6. A method according to claim 5, wherein the discovery step comprises implementing a mutual authentication procedure between the first and second service orchestrators.

7. A computer programme product comprising software instructions which, when executed by a computer, enable a method according to any one of the preceding claims to be implemented.
